# EUROPEAN PATENT SPECIFICATION

(11) **EP 2 571 580 B1**
(45) Date of publication and mention of the grant of the patent: **21.06.2017**
(21) Application number: 11783975.3
(22) Date of filing: 11.05.2011
(51) Int. Cl.: A62B 19/00

(54) **METHOD OF MAKING FILTER CARTRIDGE HAVING ROLL-BASED HOUSING SIDEWALL**
VERFAHREN ZUR HERSTELLUNG EINER FILTERKARTUSCHE MIT EINER ABROLLBAREN GEHÄUSESEITENWAND
PROCÉDÉ DE FABRICATION D'UNE CARTOUCHE FILTRANTE AYANT UNE PAROI LATÉRALE DE BOÎTIER À ROULEAUX

(30) Priority: 20.05.2010 US 784182
(43) Date of publication of application: 27.03.2013
(73) Proprietor: 3M Innovative Properties Company, St. Paul, MN 55133-3427 (US)
(72) Inventor: BILLINGSLEY, Britton G., Saint Paul, Minnesota 55133-3427 (US); LEGARE, Pierre, London Ontario N5V 3R6 (CA)
(74) Representative: Herzog, Fiesser & Partner Patentanwälte PartG mbB
(86) International application number: PCT/US2011/036076
(87) International publication number: WO 2011/146295

(56) References cited:
- WO-A1-00/24469
- WO-A1-97/20628
- WO-A1-98/57726
- US-A- 4 422 861
- US-A- 5 696 199
- US-A- 5 732 695
- US-A1- 2004 055 604
- US-A1- 2005 139 217
- US-A1- 2006 196 157

## Description

The present invention pertains to a method of making a filter cartridge where a roll based material is secured to the perimeter of the filter media layers to form a housing sidewall. The resulting filter cartridge is suitable for use on a respirator that provides clean filtered air to the wearer.

### BACKGROUND

Respirators are devices that protect workers and others from harmful health effects associated with airborne hazards. The devices are worn about the face, acting to remove unwanted contaminants from the breathing air supply. The contaminants may be solid particles such as fumes, bioaerosols, or other particles, or they may be gasses or vapors, or combinations of such substances.

Respirators come in a variety of shapes and forms and are commonly designed according to the wearer's protection needs. Respiratory products range from simple filtering facepieces, typically referred to as dust masks, to more sophisticated systems that use an elastomeric facepiece in connection with one or more replaceable filtering cartridges. Some respiratory devices additionally employ a blower to assist in delivering a clean air supply to the wearer. These products typically are referred to as positive pressure respirators or powered air purifying respirators.

A variety of different filter cartridge designs have been developed over the years for use with respiratory masks. Typical filter cartridges contain a filter medium of active particulate disposed within a housing, see for example U.S. Patent Application Publication 2006/0196157 A1. Some designs have used packed beds of activated carbon in metal canisters - see for example, U.S. Patent 4,543,112, or between support plates - see U.S. Patent 7,419,526B2 to Greer et al. Other cartridges have used injection molded plastic housings - see, for example, U.S. Patents 5,078,132 and 5,033,465 to Braun et al. - to contain the active particulate, which may be held together by bonding components - see also U.S. Patent 5,952,420 to Senkus et al. and U.S. Patent 6,216,693 to Rekow et al. In a more recent design, the investigators have used a thermoforming step to make the cartridge housing (to reduce overall cartridge weight) - see U.S. Patents 7,497,217 and 6,874,499 to Viner et al. Even though overall weight may be reduced through use of a thermoformed housing, known filter cartridges, which have used metal or plastic housings, have still had to contend with the added weight that comes with the complete housing structure. The typical filter cartridge also has not provided a dual flow pattern to reduce pressure drop across the filter media. Although bifurcated or dual flow cartridges also have been developed, which contain two spaced layers of filter media separated by a central plenum - see U.S. Patent Re 35,062 to Brostrom et al. and U.S. Patent 5,732,695 to Metzger -

these dual flow products, however, have not had a housing sidewall that defines the cartridge perimeter. As a result, the dual flow cartridges have generally contained lower volumes of filter media, which has placed limits on filter cartridge service life. Known filter cartridge products therefore have been confronted with a weight versus service life contest, which the present invention, as discussed below, addresses.

### SUMMARY OF THE INVENTION

The present invention provides a new method of making a filter cartridge, which method comprises: providing first and second filter media layers that each contain active particulate that is bonded together and that each comprise a perimeter; stacking the filter media layers in a spaced apart relationship with a plenum disposed therebetween; providing a bayonet fitting through the second layer of filter media, the bayonet fitting being in fluid communication with the plenum; and securing a roll based housing sidewall to the perimeter of the stacked, spaced-apart filter media layers, the roll based housing sidewall being secured to the perimeter using an adhesive.

The method of the present invention can provide a filter cartridge that has extensive exposed surface area for filtration since it has two layers of filter media separated by a central space. The provision of a housing sidewall in the present invention enables greater depth or thickness to be provided to the resulting filter cartridge, which increases volume and provides an extended product service life. Further, the invention is unique in that the united individual components of the filter cartridge - which by themselves are generally light in weight and have little structural capacity - provide a three-dimensional, lightweight product that has sufficient structural integrity or rigidity to function as a filter cartridge. The housing sidewall is derived from a roll-based material, which allows the resulting product to be light in weight for its total volume. Because an increased volume of filter media may be achieved, the product service life may be increased such that greater ratios of service life to weight or to volume result. Further, the inventive method is beneficial in that the assembly operation may be rapidly achieved, despite the multi-layered cartridge structure. The individual layers can be joined together at the same time as forming the housing sidewall. The process therefore provides improved ease of manufacture, which in turn may lower product cost.

### GLOSSARY

The terms set forth below will have the meanings as defined:
"active particulate" means particles or granules that are specifically suited to perform some action or function attributable to some characteristic or property including chemical properties such as catalysis and/or ion exchange and/or physical properties such as entrapment, adsorption, absorption, or combinations thereof;
"bonded" means held together through use of another contacting component or substance;
"clean air" means a volume of atmospheric ambient air that has been filtered to remove contaminants;
"exterior gas space" means the ambient atmospheric gas space into which exhaled gas enters after passing through and beyond the mask body and/or exhalation valve;
"filter cartridge" means a device that is attachable (removably or permanently) to a respirator mask body for purposes of filtering air before it enters the interior gas space;
"filter media" means an air-permeable structure that is designed to remove contaminants from air that passes through it;
"housing sidewall" means an air-impermeable surface that is located at at least a portion of the side of the structure;
"interface" means facing but not necessarily in direct contact with (there may be other layers therebetween);
"interior gas space" means the space between a mask body and a person's face;
"multiple" means four or more;
"plenum" means an area or space where more than one airflow path converges or meets another airflow path;
"plurality" means two or more;
"roll based" means obtained from a roll of the material; and
"secured" means joined together.

### BRIEF DESCRIPTION OF THE DRAWINGS

FIG. 1 is a perspective view of a respirator **10** that has first and second filter cartridges **12** and **12"** located on opposing sides of a mask body **14.**
FIG. 2 is a perspective view of a filter cartridge **12** in accordance with the present invention, particularly illustrating its inner face **28.**
FIG. 3 is a cross-section of the filter cartridge **12** taken through lines 3-3 of FIG. 2.
FIG. 4 is a flow chart, illustrating a method of making a filter cartridge **12** in accordance with the present invention.
FIG. 5 is a perspective view of a filter media production step **54** that may be used in conjunction with the present invention.
FIG. 6 is a stacking step **56** that may be used in connection with making a filter cartridge of the present invention.
FIG. 7 is perspective view of a wrapping step **58** that may be used to make a filter cartridge in accordance with the present invention.

### DETAILED DESCRIPTION OF PREFERRED EMBODIMENTS

In practicing the present invention, a new method of making a filter cartridge is achieved where a roll based housing sidewall is secured to at least a portion of the perimeter of each filter media layer. Known filter cartridges have not used roll based materials to define the housing sidewall, particularly in filter cartridges that have a bifurcated airflow pattern. Bifurcated filters have air flow paths that occur bi-directionally through two faces of the cartridge. The flow paths meet at a central space or plenum. These filter cartridges are sometimes referred to as split flow filters. In the present invention, the roll based housing sidewall is secured to the perimeter of each of the spaced filter media layers to form a strip framed filter cartridge. Because the housing sidewall takes the form of a roll based material, the resulting filter cartridge can be light in weight but with an increased service life.

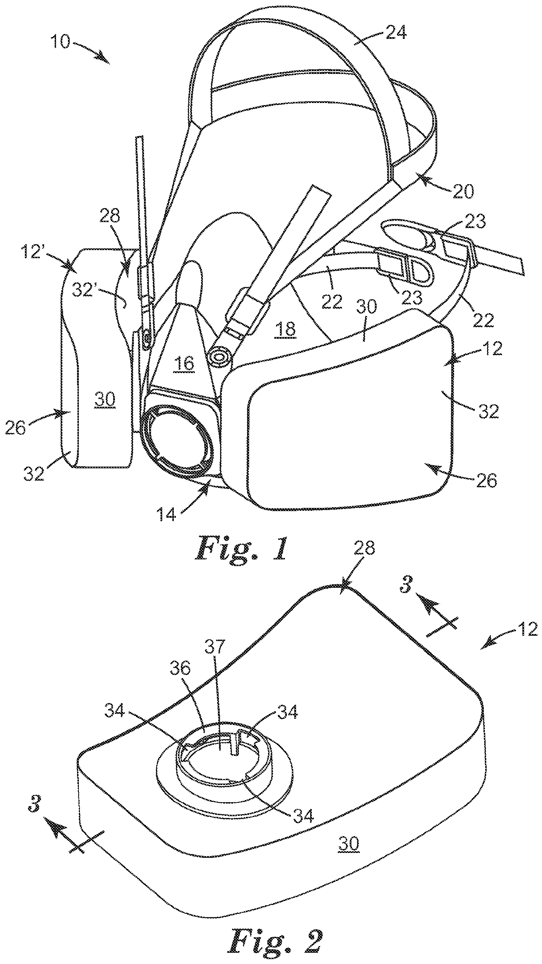

FIG. 1 illustrates a respiratory mask **10** that may be worn by a person on their head covering the nose and mouth. The respiratory mask **10** has first and second filter cartridges **12** and **12'** located on opposing sides of a mask body **14.** The filter cartridges **12** and **12'** may be detachable or permanently secured to the mask body **14.** The cartridges **12, 12'** filter ambient air before it passes into the interior gas space located within the mask body **14.** The air that becomes present in the interior gas space is clean air that it suitable for wearer inhalation. The mask body **14** may include a rigid insert **16** and an elastomeric face-contacting portion **18.** A mask body having such a construction is described in U.S. Patent 7,650,884 to Flannigan et al. The respiratory mask **10** also has a harness **20** for supporting the mask body **14** on the wearer's head when the respirator is being worn. The harness **20** may take on various configurations but commonly includes one or more straps **22** that pass behind the wearer's head. The straps **22** may be joined together by one or more buckles **23.** The harness **20** may be, for example, a drop-down harness as described in U.S. Patents 6,732,733B1 and 6,457,473 to Brostrom et al., 5,691,837 to Byram, and 5,237,986 to Seppala et al. A crown member **24** optionally also may be employed to assist in supporting the mask body **14** on the wearer's head. The filter cartridges **12, 12'** that are secured to the mask body **14** have first and second major surfaces **26** and **28** and a roll based housing sidewall **30.** The housing sidewall **30** extends at least from a first exposed major surface **32** of a first layer of filter media to at least a first exposed major surface **32'** of a second layer of filter media. The housing sidewall **30** is secured to the perimeter of the first and second layers of filter media. The housing sidewall **30** will typically extend over the whole perimeter of the active particulate layers in the filter media so that no active particulate is visible from a side view of the cartridge. The housing sidewall **30** also could be provided with a flange that extends radially inward over the first and second exposed major surfaces **26** and **28.** As illustrated, the filter cartridge may be curved from front to back. The cartridge also may be curved from top to bottom, or in both directions.

FIG. 2 illustrates a reverse or inner side of the filter cartridge **12.** A bayonet fitting **36** is present on the bottom surface **28** of the filter cartridge to allow for securement of the cartridge to a mask body. The fitting **36** also can provide a conduit (or access to a conduit) through the second layer of filter media into a centrally-disposed plenum. The mating of the mask body to the filter cartridge **12** may be achieved by inserting a male fitting that is disposed on the mask body into the bayonet fitting **36** and rotating the filter cartridge **12** in the appropriate direction relative to the mask body. The male fitting would have knobs disposed thereon which would mate with the cut-out notches **34** in the bayonet fitting **36.** In use, air that passes through the first and second major surfaces **26** and **28** of the filter cartridge **12** enters a plenum which is in fluid communication with the opening **37** in the bayonet fitting **32.** Thus, the bayonet fitting **36** may contribute to both a fluid communication and a securement means. Alternatively, a conduit and fitting may be provided on the housing sidewall **30,** typically on the forward portion of the sidewall, rather than on the major surface **28.** By repositioning the conduit and fitting onto the sidewall **30** and passing the air out through a slotted opening immediately adjacent the plenum, the effective filtering area on the cartridge surface **28** may be increased, which may result in improved performance, while reducing waste in the manufacturing process.

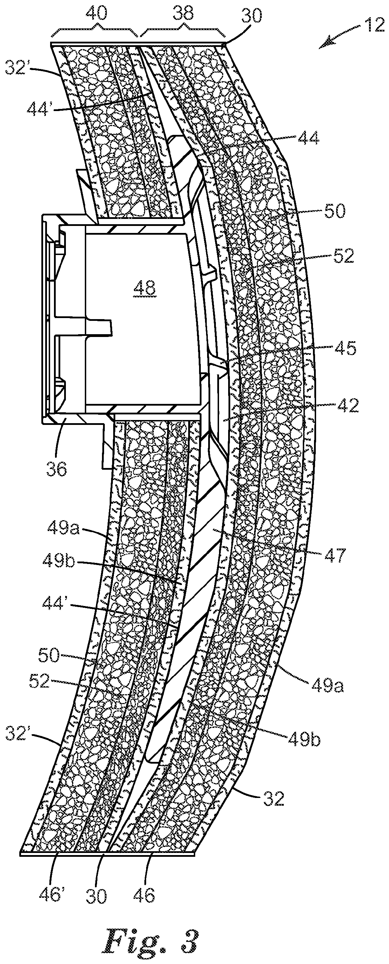

FIG. 3 illustrates an example of the interior construction of the filter cartridge **12.** As shown, the filter cartridge **12** contains first and second layers of filter media **38** and **40,** respectively. The first and second layers of filter media **38, 40** are separated by a plenum **42.** The first and second layers of filter media **38, 40** each have first major surfaces **32, 32',** second major surfaces **44, 44',** and a perimeter **46, 46'.** The plenum **42** is disposed between the first and second layers of filtering media **38, 40** such that the plenum **42** interfaces with the second major surface **44, 44'** of each layer of filter media **38, 40.** The plenum may be defined by a spacer **45,** which may take the form of a plastic structure that has a series of ribs **47** extending from the conduit **48** towards the perimeter **46, 46'** of each filter media layer. The housing sidewall **30** generally extends from the first major surface **32** of the first layer **38** of filter media to the first major surface **32'** of the second layer of filter media **40.** The housing sidewall **30** may be secured to the perimeter **46, 46'** of the first and second layers of filter media **38, 40,** respectively, using an adequate securement means. The first major surfaces **32, 32'** of the first and second layers of filter media **38, 40** are each fluid-permeable and are each in fluid communication with the exterior gas space. Cover webs **49a** may be disposed on the outer surfaces of the first and second layers of filter media **38, 40.** Cover webs **49b** may be disposed on the inner surfaces of the first and second layers of filter media **38, 40.** The cover webs **49a, 49b** may serve to protect the active particulate layers **50, 52** by retaining the active particulate granules within each layer **50, 52.** The coarse layer **50** is located upstream to the finer layer **52** and functions as a primary filtering layer, whereas the finer layer **52** acts as a polishing layer. The housing sidewall **30,** which is disposed along the sides or periphery of the filter cartridge **12,** is roll based - that is, it may be taken from a roll and may be secured to the perimeter of the filter media layers **38, 40** by various means. The securement means may be achieved with an adhesive such as a pressure sensitive adhesive, a glue such as a hot met glue, a polyurethane reactive hot melt, or a UV curable adhesive. Examples of commercially available products that may be used to secure the housing sidewall **30** to the assembly **72** include 3M brand adhesives JetMelt™, ScotchWeld™, and FastBond™. The securement means typically is disposed on the interior face of the sidewall **30,** at least at the areas where the first and second layers of filter media **38, 40** make contact with the inner surface of the housing sidewall **30.** The securement between the first and second layers of filter media **38, 40** and the interior surface of the housing sidewall **30** should be such that break-through does not occur when air is passing through the filter cartridge **12** during use. That is, air will not be able to circumvent the filtering capacity of the first and second layers of filter media **38, 40** by passing through the cartridge **12** along the housing sidewall. Although the filter media layers **38, 40** each have been illustrated as containing plural layers of active particulate, each filter media layer **38, 40** may include a single layer of active particulate.

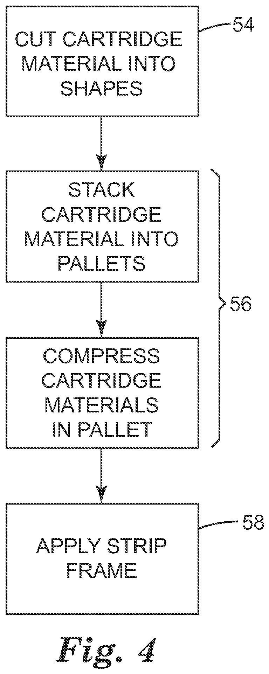

FIG. 4 shows the general steps that may be used in making a filter cartridge in accordance with the present invention. As shown, the present invention basically comprises three steps: providing **54** filter media layers; assembling **56** the filter media layers in a stacked spaced apart relationship; and wrapping **58** the filter media layers along at least a portion of their perimeter. The filter media layers may be provided by constructing layers of the active particulate that is used to filter the air and cutting those layers normally thereto to provide a plurality of layers of filter media sized for use in the filter cartridge. These layers may be assembled together by stacking them in a spaced apart relationship relative to one another. A spacer may be provided between the layers to maintain their desired spacing. Further, the bayonet fitting, which also may provide a conduit into the plenum, may be provided through the second layer of filter media. The stacked layers are compressed into their desired position relative to each other. Once the layers are assembled in the desired position, the housing sidewall can be wrapped **58** about the perimeter of the assembled layers to provide a filter cartridge that is generally lightweight in mass and is of a sturdy construction.

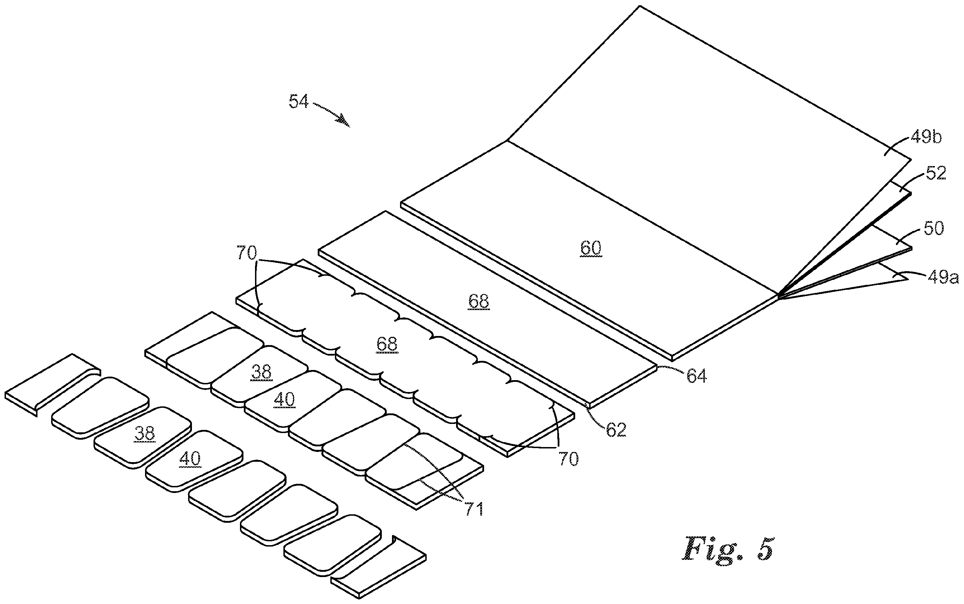

FIG. 5 illustrates an operation that may be used in providing the first and second layers of filter media **38, 40** that are subsequently assembled and wrapped with a housing sidewall **30.** Multiple layers of material may be used in assembling a layer of filter media for use in accordance with the present invention. For example, a first cover web **49a,** a first layer of active particulate **50,** a second layer of active particulate **52,** and a second cover web **49b** may be assembled to provide a filter media blank **60.** The first and second layers of the cover web **49a** and **49b** may be provided on opposing sides of the layers of active particulate **50, 52** to protect the layers and to ensure that the granules are retained within the composite filter media structure. As indicated above, the first layer of active particulate **50** may be constructed to have a lower pressure drop and larger pore size than the second layer of active particulate **52.** This may be achieved through use of larger particles in the first layer **50** than in the second layer **52.** The first layer of active particulate **50** therefore acts as a primary filtering layer, whereas the second layer **52** acts as a back-up layer. While the first layer of active particulate **50** may have a lower pressure drop, it generally would have a greater thickness and therefore is fashioned to remove a larger quantity of contaminants than the second layer **52.** Although the second layer **52** may generally have a higher pressure drop, it also may have a higher kinetics and therefore may remove contaminants that may have passed through the first layer **52.** Accordingly, the second layer is generally referred to as a polishing layer. The size of the active particulate that would be used in the first layer **50** may generally be about 12x30 mesh to 20x40 mesh, whereas the active particulate in the second layer **52** may generally be sized to be about 40x140 mesh to 80x320 mesh. The thickness of the primary filtering layer may be about 5 millimeters (mm) to 25 mm, and the thickness of the polishing layer may be about 1 to 4 mm. Once the multiple layers of cover web and active particulate have been assembled into a multi-layer blank **60,** this blank is cut crosswise linearly along lines **62** and **64.** The distance between the cut lines **62** and **64** define the length of the filter media that will be placed in the cartridge housing. The severed blank **68** is then subjected to a further cutting operation where rounded corners **70** are provided on the cut blank **60.** These rounded corners **70** generally define the width of the filter media layers that will be disposed within the cartridge housing. Subsequent to the cutting step that defines the corners, a series of lengthwise cuts **71** are provided to fully define the shape and configuration of each filter media layer that would be disposed in the filter cartridge. These cut layers are then separated so that they can be directed to the subsequent assembly step. The separation may be achieved by flipping the arrangement upon itself.

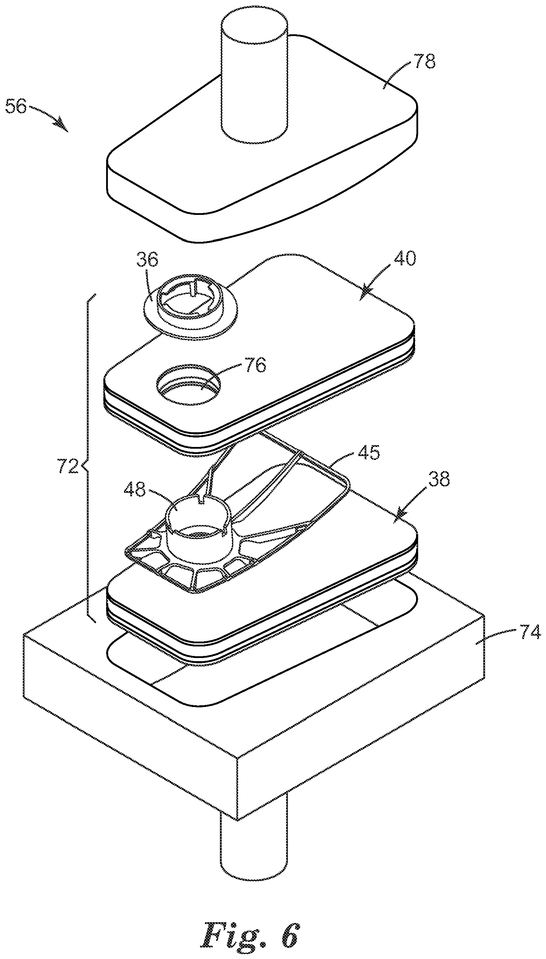

FIG. 6 illustrates the step of assembling the individual filter media layers **38, 40** and plenum spacer **45** into a construction that would define the filter cartridge interior. In constructing the interior assembly **72** for the filter cartridge, the second layer of filter media **40,** the spacer **45,** the first layer of filter media **38,** and the bayonet fitting **36** are sequentially placed in a receptacle **74.** The second layer of filter media **40** is distinguished from the first layer of filter media **38** in that the second layer of filter media **40** has an opening **76** located therein so that a conduit **48** can pass therethrough. The conduit **48** extends normal from the plenum spacer **45** in a tubular fashion. The bayonet fitting **36** is joined to the conduit member **48** as illustrated in FIG. 3. Once the parts are appropriately aligned, the plunger **78** is used to press the assembled items together to create first and second layers of filter media **38** and **40** that are separated from each other in a spatial relationship. The spacer **45** ensures the proper spatial distance between layers **38** and **40** and helps distribute airflow from the filter media layers **38** and **40** into the conduit **48.**

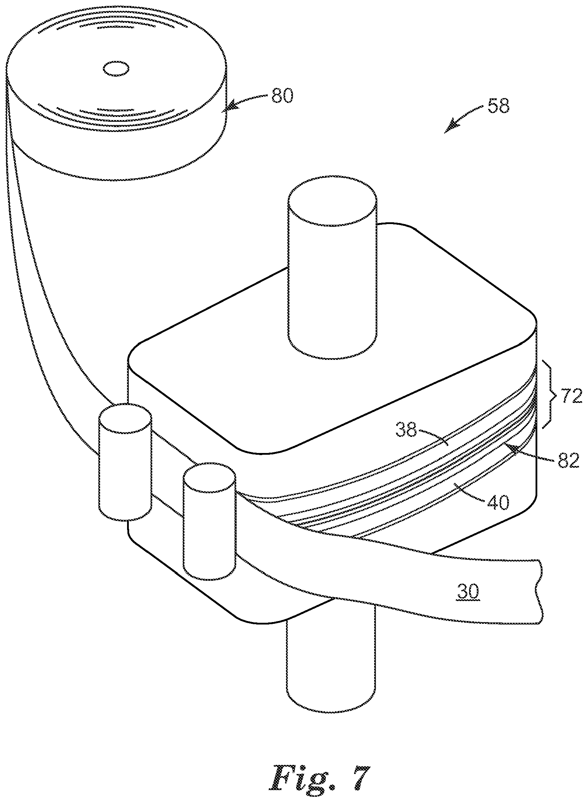

FIG. 7 shows the assemblage **72** in the proper compressed state, ready for having the housing sidewall **30** applied thereto. The housing sidewall **30** is withdrawn from a roll **80** and is secured to the perimeter **82** of the filter cartridge assembly **72.** In particular, the housing sidewall **30** is secured to the first and second layers of filter media **38** and **40** such that no significant breakthrough occurs along the perimeter **82.** To this end, a suitable bonding means may be disposed on the interior surface of the material used to make the housing sidewall. Once the housing sidewall **30** is properly secured to the perimeter **82** of the cartridge assembly **72,** the resulting filter cartridge may be attached to a mask body for purposes of filtering air.

The present invention is particularly beneficial in that it provides a simple housing system that recognizes the need for a low cost solution, given the status of the filter as a consumable item. The housing sidewall may comprise a band of paperboard to which the internal layers are adhesively fixed. Alternatively a thin plastic band can be applied, for example a 0.1 to 0.2 mm thick plastic with suitable properties, for example polyester, if additional robustness is desired. Multilayered roll based materials also may be used. The exterior surface desirably is able to accept printable indicia. The sidewall typically will have a width of about 2 to 3 centimeters (cm) but can be increased to as much as 6 cm, where significant volume of carbon is required for a targeted application or a specific regulatory standards' approval. The sidewall thickness typically is about 0.1 to 0.5 mm. The sidewall band can be formed using a die cutting process, as opposed to more expensive injection molding commonly used in making other filter housing designs. Filter cartridges of the present invention may exhibit organic vapor service life to weight ratios (minutes/gram) of greater than 0.9, still greater than 1.0, and yet still greater than 1.1. The inventive cartridges also may have organic vapor service life to volume ratios of greater than 0.35, still greater than 0.4, and yet still greater than 0.45. The organic vapor service life may be determined according to the test set forth below in the Example section.

Because the resulting filter cartridge is made from a housing that essentially comprises a roll-based sidewall, the cartridge may weigh substantially less than known filter cartridges. Known filter cartridges typically use extruded plastics or possess a solid housing base, which increases overall product weight. The inventive cartridge has two exposed surfaces through which air may pass to enter the plenum. The use of two fluid-impermeable faces on the filter cartridge not only reduces weight but also reduces pressure drop. The resulting cartridge therefore may be light in weight and easy to breath through.

The filter media that is used in the present invention contains active particulate that is bonded together through various means. One subclass of such particulate materials is particles that interact with components in a fluid to remove or alter their composition. The components in the fluid may be sorbed onto or into the active particulate, or they may be reacted with a second component that may or may not be present on the activated particulate. Thus, the active particulate may be sorptive, catalytic, reactive, or combinations thereof. A variety of active particulate can be employed. Desirably the active particulate is capable of absorbing or adsorbing gases, aerosols, or liquids that are expected to be present under the intended use conditions. The sorbent particles can be in any usable form including beads, flakes, granules, or agglomerates. Typical sorbent particles include activated carbon; alumina and other metal oxides; sodium bicarbonate; metal particles (e.g., silver particles) that can remove a component from a fluid by adsorption, chemical reaction, or amalgamation; particulate catalytic agents such as hopcalite (which can catalyze the oxidation of carbon monoxide); clay and other minerals treated with acidic solutions such as acetic acid or alkaline solutions such as aqueous sodium hydroxide; ion exchange resins; molecular sieves and other zeolites; silica; biocides; fungicides and virucides. Activated carbon and alumina are common sorbent particles. Mixtures of sorbent particles also can be employed, e.g., to absorb mixtures of gases, although in practice to deal with mixtures of gases it may be better to fabricate a multilayer sheet article employing separate sorbent particles in the individual layers. The desired active particulate size can vary a great deal and usually will be chosen based in part on the intended use conditions. As a general guide, the active particulate may vary in size from about 5 to 3000 micrometers in average diameter. Commonly the particles are less than about 1500 micrometers in average diameter, more typically between about 30 and about 800 micrometers in average diameter, and still more typically between about 100 and about 300 micrometers in average diameter. The activate particulate can be additionally treated with one or more impregnants to enhance gas removal capability. Examples of treated active particulate materials include chemically surface-treated activated carbon - see for example U.S. Patent Nos. 7,309,513 and 7,004,990 to Brey et al., 6,767,860 to Hern et al., 6,344,071 to Smith et al., and 5,496,785 and 5,344,626 to Abler. Typical particulates for acting as sorbents in an air-purifying system are activated carbon, chemically-treated carbon, and alumina adsorbent particulate. An example of commercially available activated carbon that can be used is sold under the trademark Kuraray, such as Kuraray GG or GC, which are described in product bulletin 8712-1000 of the Kuraray Carbon Co., Ltd. Other commercial products are CECACARBON™ activated carbon products.

The first and second layers of filtering media contain active particulate that is bonded together through one or more various means. For example, the active particulate can be joined together through use of PSA microparticulate as described in U.S. Patent 6,391,429 to Senkus et al.. When using such an approach, the adhesive polymer microparticulate is generally smaller in size than the active particulate. The adhesive polymer microparticulate may be, for example, about 1 to about 1,000 micrometers in size. The adhesive polymer microparticulate may be distributed among the active particulate in amounts sufficient to adhere them together in a flexible composite structure. The microparticulate may be in the form of solid polyacrylate beads and may comprise a copolymer having repeating units comprising those derived from acrylic acid ester of a non-tertiary alcohol having 1 to 14 carbon atoms and a polar monomer. The repeating units may further comprise those derived from vinyl acetate. The repeating units may comprise those derived from compounds selected from the group consisting of a higher vinyl ester, styrene sulfonate salt, multi-vinyl monomer, and alpha, beta-ethylenically unsaturated poly(alkyleneoxy)sulfate, or combinations thereof. In the approach described in U.S. Patent 5,078,132 to Braun et al., the active particulate may be joined together by binder particles. The binder materials that are suitable for use in joining active particulate together generally satisfy the polymer binder melt test referenced in the '132 patent. Alternatively, the active particulate may be joined together by polymeric fibers to create a porous sheet-like article. The porous sheet-like article may be a self-supporting nonwoven web that has less than about 20 weight percent polymeric fibers. The active particulate is sufficiently evenly distributed in the web amongst the fiber polymers such that the web has an Absorption Factor A of at least 1.6 x 10⁴/mm water. The Adsorption Factor A can be calculated using parameters or measurements similar to those described in Wood, Journal of the American Industrial Hygiene Association, 55(1):11-15 (1994). The following U.S. patent application publications describe active particulate that is held together by polymeric fibers suitable for use in the present invention: 2006/0096911A1 to Brey et al., 2006/0254427A1 to Trend et al., and 2009/0215345A1 to Brey et al.

The fibers that are used to bond active particulate together may be made from blends of polymeric materials, for example, blends of polyolefin elastomers and elastomeric styrenic block copolymers. If desired, a portion of the disclosed web can represent polymers or other fibrous or fiber-forming materials, which would not by themselves exhibit adequate resistance to dimethylmethylphosphorate (DMMP) uptake or which would not by themselves provide a web with the desired Adsorption Factor A. For example, suitably loaded webs made from the linear low density polyethylene DOWLEX 2517 has been shown to have an Adsorption Factor A of about 2.1 x 10⁴/mm water, whereas a similarly loaded web made from the linear low density polyethylene DOWLEX 2503 has been shown to have an Adsorption Factor A of about 1.0 x 10⁴/mm water. Also, unloaded webs made from 90:10 and 50:50 blends of the polyolefin elastomer ENGAGE 8402 and the styrenic block copolymer KRATON G1657 have been shown to have very low DMMP uptake, and a 91 wt % carbon-loaded web in which the polymeric material is only ENGAGE 8402 has been shown to have an Adsorption Factor A of about 2.6 x 10⁴/mm water, whereas an 88 wt. % carbon-loaded web in which the polymeric material is only KRATON G1657 is shown below to exhibit an Adsorption Factor A of about 1.4 x 10⁴/mm water.

The filter media layers also may be formed from multicomponent fibers such as core-sheath fibers, splittable or side-by-side bicomponent fibers or so-called "islands in the sea" fibers. In addition, the filter media layers may be formed using other polymeric materials as one or more of the components, or by adding other fibrous or fiber-forming materials including staple fibers (e.g., of natural or synthetic materials) and the like. Typically, however, relatively low amounts of other fibrous or fiber-forming materials have been used in the disclosed webs so as not to detract unduly from the desired sorbent particle loading level and finished web properties.

The polymer fibers, as noted above, exhibit no more than about 1 weight percent DMMP uptake after an unloaded web of such fibers has been exposed to air saturated with DMMP vapor at room temperature for six days. The polymer fibers may under such conditions exhibit no more than about 0.5 weight percent DMMP uptake, no more than about 0.3 weight percent DMMP uptake, or no more than about 0.2 weight percent DMMP uptake.

The polymers used in the fibers that bond the active particulate together may have (but is not required to have) greater elasticity than similar caliper polypropylene fibers. The polymer also may be but is not required to be "elastomeric", that is a material that may be stretched to at least 125 percent of its initial relaxed length and that may recover to substantially its initial relaxed length upon release of the biasing force. The polymer in fiber form also may have (but is not required to have) greater crystallization shrinkage than similar caliper polypropylene fibers. Fibers that have such elasticity or crystallization shrinkage characteristics may promote autoconsolidation or densification of the filter media layer, reduction in the web pore volume, or reduction in the pathways through which gases can pass without encountering an available sorbent particle. Densification may be promoted in some instances by forced cooling of the web using, for example, a spray of water or other cooling fluid, or by annealing the collected web in an unrestrained or restrained manner. Annealing times and temperatures may depend on various factors including the polymeric fibers employed and the sorbent particle loading level.

Mixtures (e.g., bimodal mixtures) of sorbent particles that have different sizes also can be employed in the filter media layers, although in practice it may be better to fabricate a multilayer sheet article that contains larger sorbent particles in an upstream layer and smaller sorbent particles in a downstream layer. At least 80 weight percent active particulate particles, more preferably at least 84 weight percent, and most preferably at least 90 weight percent active particulate particles are typically enmeshed in the fibrous web. Expressed in terms of basis weight, the active particle loading level may, for example, be at least about 100 g/m² (gsm) for relatively fine (namely, small diameter) particles, and at least about 500 g/m² for relatively coarse particles.

The use of a loaded web that comprises active particulate disposed within an elastic polymeric fibrous web is beneficial in that it enables conformal filter shapes to be made without use of a supporting rigid plastic or metal housing system. Conformal shapes are shapes that exhibit curvature in one or more dimensions. The filter cartridge may be fashioned to curve front-to-back or top-to-bottom or both. Ideally the curvature is set to follow the shape of the facepiece, resulting in a more overall compact respirator, which may improve wearer visibility. Further, particulate webs can be stacked on top of the loaded webs to additionally provide particulate removal capabilities. In another embodiment particulate filtering layers alone can be applied where gas removal capability is not needed. The particulate filter layers may comprise nonwoven webs of electrically charged microfibers, particularly polymeric melt-blown microfibers or BMF - see, for example, U.S. Patents 7,244,291 to Spartz et al, 6,397,458 to Jones et al., and 6,119,691 to Angadjivand et al. Microfibers typically have an effective fiber diameter of less than about 25 micrometers, more commonly less than about 15 micrometers. Electrically charged webs that contain such fibers may be manufacture as described, for example, in U.S. Patent 6,846,450 to Erickson et al., 6,824,718 to Eitzman, and 5,496,507 to Angadjivand et al.

Cover webs that are used in conjunction with the filter media layers typically do not provide any substantial filtering benefits to the filtering structure, although it can act as a pre-filter when disposed on the exterior (or upstream to) the filtration layer. The cover web may be fashioned to have a basis weight of about 5 to 50 grams per square meter (g/m²), typically 10 to 30g/m², and may contain microfibers as well. Fibers used in the cover web often have an average fiber diameter of about 5 to 24 micrometers, typically of about 7 to 18 micrometers, and more typically of about 8 to 12 micrometers. The cover web material may have a degree of elasticity (typically, but not necessarily, 100 to 200% at break) and may be plastically deformable. The cover web may contain polymeric spunbond fibers made from, for example, polypropylene.

Cover webs that are used in the invention preferably have very few fibers protruding from the web surface after processing and therefore have a smooth outer surface. Examples of cover webs that may be used in the present invention are disclosed, for example, in U.S. Patent 6,041,782 to Angadjivand, U.S. Patent 6,123,077 to Bostock et al., and WO 96/28216A to Bostock et al.

### EXAMPLES

### OV Service Life Test

To determine the service lives of the filtration devices, they were challenged with 1000 parts per million (ppm) cyclohexane at 32 liters per minute and at 50% relative humidity. The amount of time that elapsed when the devices allowed 5 ppm of cyclohexane to exit the filter determined the service life. The test method was similar to NIOSH Test method RCT-APR-STP-0046. Equivalent equipment was used. Filters were tested in an as received condition.

### Example 1

Carbon loaded BMF webs were made according to U.S. Patent Application No. 2006/096911. The polymer fibers were produced using Vistamaxx™ 2125 resin, produced my ExxonMobil.

The bulk carbon loaded webs were compressed to about 4.7mm in thickness using a Carver heated platen press that had 30.48 cm by 30.48 cm (12 inch by 12 inch) platens. The platen temperatures were 93.33 °C (200 °F). The pressure was 20.68 MPa (3000 pounds per square inch (psi)) total, and the press time was 5 seconds.

In the following description, OV refers to organic vapor, and gsm means grams per square meter. The bulk and polishing layers had the construction set forth in Table 1.

**Table 1**

| **Properties and Materials** | **OV Bulk** | **OV Polishing** |
|---|---|---|
| Web weight total(gsm) | 1482 | 428 |
| Polymer wt (gsm) | 54 | 42 |
| Carbon | Kuraray GC 12x20 | Kuraray GC 60 x 150 |
| Web Thickness - final | 4.5 mm | 2 mm |

The filter was assembled having the following order of layers:
OV Bulk
OV Bulk
OV Polishing
Plenum structure
OV Polishing
OV Bulk
OV Bulk

The layers were die cut into a trapezoidal shape having a surface area of about 67 square centimeters. The layers were arranged in the order indicated above and were sealed around their perimeter by applying a paperboard strip of 0.5 mm thickness. A 3M grade 3764 hot melt adhesive was used to secure the strip around the perimeter of the layered assembly. The plenum structure, consisting of a mechanical component similar to that shown in the drawings, generated a plenum gap thickness between the upper and lower layers of 4 mm.

### Comparative Example 1

Kuraray GC 12 x 20 carbon (105 cc) was storm filled into a 3M 6000 respiratory filter cartridge body, and a lid was ultrasonic welded to the top.

### Comparative Example 2

A bifurcated filter cartridge that lacks a housing sidewall was used. This product had the construction described in U.S. Patent RE 35,062 to Brostrom.

The filter cartridges of Example 1 and Comparative Examples 2 and 3 were weighed, measured for volume, and tested for organic vapor service life. The service lives were divided by the cartridge weight and volume to give *SL*/*wt* and *SL*/*vol* ratios. The results are set forth below in Table 2.

**Table 2**

| **Example** | **Weight (g)** | **Volume (ml)** | **Service Life (mins)** | *SL*/*wt* **(mins/s)** | *SL*/*vol* **(mins/ml)** |
|---|---|---|---|---|---|
| 1 | 72.72 | 170.4 | 87 | 1.15 | .49 |
| C1 | 100.4 | 281.4 | 84 | 0.84 | 0.3 |
| C2 | 13.34 | 129.9 | 4 | 0.3 | 0.03 |

The data set forth above demonstrates that the inventive filter cartridge exhibits better ratios of service life to weight or to volume than the comparative single or bifurcated flow filter cartridges.

This invention is not limited to the above-described but is to be controlled by the limitations set forth in the following claims .

This invention also may be suitably practiced in the absence of any element not specifically disclosed herein.

## Claims

1. A method of making a filter cartridge, which method comprises:
providing first and second filter media layers that each contain active particulate that is bonded together and that each comprise a perimeter;
stacking the filter media layers in a spaced apart relationship with a plenum disposed therebetween;
providing a bayonet fitting through the second layer of filter media, the bayonet fitting being in fluid communication with the plenum; and
securing a roll based housing sidewall to the perimeter of the stacked, spaced-apart filter media layers, the roll based housing sidewall being secured to the perimeter using an adhesive..

2. The method of claim 1, wherein the first and second filter media layers each have a fluid permeable surface exposed to an external gas space when in use.

3. The method of claim 1, wherein the filter media layers are provided by constructing one or more layers that each comprise a layer of active particulate and a cover web and cutting the one or more constructed layers to a desired shape.

4. The method of claim 1, wherein a spacer is placed between the first and second filter media layers during the stacking step, and wherein the stacked layers are compressed into a desired spacing relative to each other.

5. The method of claim 1, wherein the first and second filter media layers are each provided by placing cover webs on one or more sides of one or more layers of activated carbon, and wherein the first and second filter media layers each comprise first and second layers of activated carbon, the first layer of activated carbon having a larger particle size than the second layer of activated carbon.

6. The method of claim 5, wherein the first layer of activated carbon comprises activated carbon having a size of 12x30 to 20x40 mesh, and wherein the second layer of activated carbon comprises activated carbon having a size of 40x140 to 80x320 mesh.

7. The method of claim 1, wherein the first and second filter media layers are stacked with a spacer therebetween and are then pressed into the desired spacial arrangement.

8. The method of claim 7, wherein the housing sidewall is wrapped about the perimeter of the first and second stacked filter media layers.

9. The method of claim 1, wherein the sidewall has a width of about 2 to 3 centimeters (cm).

10. The method of claim 9, wherein the sidewall has a thickness of about 0.1 to 0.5 mm.

11. The method of claim 1, wherein the first and second filter media layers comprise activated carbon that is bonded together by polymer microparticulate or binder particles or by polymeric fibers to create a porous sheet-like layer.

12. The method of claim 11, wherein the porous sheet-like layer is a self-supporting nonwoven web that has less than about 20 weight percent polymeric fibers.

13. The method of claim 12, wherein the active particulate is evenly distributed in the web amongst the polymeric fibers, and wherein the first and second filter media layers each have an Absorption Factor A of at least 1.6 x 10⁴/mm water.

14. A method of making a respirator, which method comprises making a filter cartridge by carrying out the method of claim 1, and placing one or more of the filter cartridges obtained by the method of claim 1 onto a mask body.

## Patentansprüche

1. Verfahren zur Herstellung einer Filterkartusche, wobei das Verfahren Folgendes umfasst:
Bereitstellen einer ersten und zweiten Filtermediumschicht, die jeweils aktive Teilchen enthalten, die miteinander verklebt sind und die jeweils eine Abgrenzung umfassen;
Übereinanderschichten der Filtermediumschichten in einem räumlich getrennten Verhältnis mit einem dazwischen angeordnetem Plenum.
Bereitstellen eines Bajonettverschlusses durch die zweite Schicht des Filtermediums, wobei der Bajonettverschluss eine Fluidverbindung mit dem Plenum hat; und
Befestigen einer aus Rollenmaterial hergestellten Gehäuseseitenwand an der Abgrenzung der aufeinandergeschichteten, räumlich getrennten Filtermediumschichten, wobei die aus Rollenmaterial hergestellte Gehäuseseitenwand an der Abgrenzung mithilfe eines Klebers befestigt ist.

2. Verfahren nach Anspruch 1, wobei die erste und zweite Filtermediumschicht jeweils eine flüssigkeitsdurchlässige Oberfläche aufweisen, die bei Verwendung einem externen Gasraum ausgesetzt wird.

3. Verfahren nach Anspruch 1, wobei die Filtermediumschichten bereitgestellt werden durch Konstruktion einer oder mehrerer Schichten, die jeweils eine Schicht aktiver Teilchen und eine Abdeckungsbahn umfassen, und Zuschneiden der einen oder mehreren konstruierten Schichten in eine gewünschte Form.

4. Verfahren nach Anspruch 1, wobei während des Schritts des Aufeinanderschichtens ein Abstandshalter zwischen der ersten und zweiten Filtermediumschicht platziert wird, und wobei die geschichteten Schichten auf einen gewünschten Abstand relativ zueinander komprimiert werden.

5. Verfahren nach Anspruch 1, wobei die erste und zweite Filtermediumschicht jeweils bereitgestellt wird, indem Abdeckungsbahnen auf einer oder mehreren Seiten von einer oder mehreren Schichten Aktivkohle platziert werden, und wobei die erste und zweite Filtermediumschicht jeweils erste und zweite Schichten Aktivkohle umfassen, wobei die erste Aktivkohleschicht eine größere Teilchengröße aufweist als die zweite Aktivkohleschicht.

6. Verfahren nach Anspruch 5, wobei die erste Aktivkohleschicht Aktivkohle mit einer Größe von 12x30 bis 20x40 mesh umfasst, und wobei die zweite Aktivkohleschicht Aktivkohle mit einer Größe von 40x140 bis 80x320 mesh umfasst.

7. Verfahren nach Anspruch 1, wobei die erste und zweite Filtermediumschicht mit einem Abstandshalter dazwischen aufeinandergeschichtet und dann in die gewünschte räumliche Anordnung verpresst werden.

8. Verfahren nach Anspruch 7, wobei die Gehäuseseitenwand um die Abgrenzung der aufeinandergeschichteten ersten und zweiten Filtermediumschichten gewickelt wird.

9. Verfahren nach Anspruch 1, wobei die Seitenwand eine Dicke von etwa 2 bis 3 Zentimeter (cm) aufweist.

10. Verfahren nach Anspruch 9, wobei die Seitenwand eine Dicke von etwa 0,1 bis 0,5 Millimeter (mm) aufweist.

11. Verfahren nach Anspruch 1, wobei die erste und zweite Filtermediumschicht Aktivkohle umfassen, die mittels Polymermikropartikel oder Bindemittelpartikel oder Polymerfasern zusammengefügt werden, um eine poröse, blattähnliche Schicht zu schaffen.

12. Verfahren nach Anspruch 11, wobei die poröse, blattähnliche Schicht eine selbsttragende Vliesstoffbahn ist, die weniger als 20 Gewichtsprozent Polymerfasern enthält.

13. Verfahren nach Anspruch 12, wobei die aktiven Teilchen gleichmäßig in der Bahn zwischen den Polymerfasern verteilt sind, und wobei die erste und zweite Filtermediumschicht jeweils einen Absorptionsgrad A von mindestens 1,6 x 10⁴/mm Wasser aufweisen.

14. Verfahren zur Herstellung eines Atemschutzgeräts, wobei das Verfahren die Herstellung einer Filterkartusche durch Durchführen des Verfahrens nach Anspruch 1 und das Platzieren einer oder mehrerer Filterkartuschen, die anhand des Verfahrens nach Anspruch 1 erhalten wurden, auf einen Maskenkörper umfasst.

## Revendications

1. Procédé de fabrication d'une cartouche filtrante, lequel procédé comprend :
la fourniture de première et deuxième couches de milieu filtrant qui contiennent chacune une matière particulaire active qui est mutuellement liée et qui comprennent chacune un périmètre ;
l'empilement des couches de milieu filtrant dans une relation espacée avec une chambre de distribution disposée entre elles ;
la fourniture d'un raccord à baïonnette à travers la deuxième couche de milieu filtrant, le raccord à baïonnette étant en communication fluidique avec la chambre de distribution ; et
la fixation d'une paroi latérale de logement à base de rouleau au périmètre des couches de milieu filtrant empilées et espacées, la paroi latérale de logement à base de rouleau étant fixée au périmètre à l'aide d'un adhésif.

2. Procédé selon la revendication 1, dans lequel les première et deuxième couches de milieu filtrant ont chacune une surface perméable aux fluides exposée à un espace gazeux externe en cours d'utilisation.

3. Procédé selon la revendication 1, dans lequel les couches de milieu filtrant sont fournies en construisant une ou plusieurs couches qui comprennent chacune une couche de matière particulaire active et une bande de couverture et en coupant la ou les couches construites à une forme souhaitée.

4. Procédé selon la revendication 1, dans lequel un dispositif d'espacement est placé entre les première et deuxième couches de milieu filtrant pendant l'étape d'empilement, et dans lequel les couches empilées sont comprimées dans un espacement souhaité les unes par rapport aux autres.

5. Procédé selon la revendication 1, dans lequel les première et deuxième couches de milieu filtrant sont chacune fournies par la mise en place de bandes de couverture sur un ou plusieurs côtés d'une ou plusieurs couches de charbon actif, et dans lequel les première et deuxième couches de milieu filtrant comprennent chacune des première et deuxième couches de charbon actif, la première couche de charbon actif ayant une taille de particules plus grande que la deuxième couche de charbon actif.

6. Procédé selon la revendication 5, dans lequel la première couche de charbon actif comprend du charbon actif ayant une taille de 12x30 à 20x40 mesh, et dans lequel la deuxième couche de charbon actif comprend du charbon actif ayant une taille de 40x140 à 80x320 mesh.

7. Procédé selon la revendication 1, dans lequel les première et deuxième couches de milieu filtrant sont empilées avec un dispositif d'espacement entre elles et sont ensuite pressées dans l'agencement spatial souhaité.

8. Procédé selon la revendication 7, dans lequel la paroi latérale de logement est enveloppée autour du périmètre des première et deuxième couches empilées de milieu filtrant.

9. Procédé selon la revendication 1, dans lequel la paroi latérale a une largeur d'environ 2 à 3 centimètres (cm).

10. Procédé selon la revendication 9, dans lequel la paroi latérale a une épaisseur d'environ 0,1 à 0,5 mm.

11. Procédé selon la revendication 1, dans lequel les première et deuxième couches de milieu filtrant comprennent du charbon actif qui est mutuellement lié par des particules microparticulaires polymères ou de liant ou par des fibres polymères de façon à créer une couche de type feuille poreuse.

12. Procédé selon la revendication 11, dans lequel la couche de type feuille poreuse est une bande non tissée autoporteuse qui a moins d'environ 20 pour cent en poids de fibres polymères.

13. Procédé selon la revendication 12, dans lequel la matière particulaire active est uniformément répartie dans la bande parmi les fibres polymères, et dans lequel les première et deuxième couches de milieu filtrant ont chacune un facteur d'absorption A d'au moins 1,6 x 10⁴/mm d'eau.

14. Procédé de fabrication d'un respirateur, lequel procédé comprend la fabrication d'une cartouche filtrante en effectuant le procédé selon la revendication 1, et en plaçant une ou plusieurs des cartouches filtrantes obtenues par le procédé selon la revendication 1 sur un corps de masque.
